# EUROPEAN PATENT SPECIFICATION

(11) **EP 2 487 961 B1**
(45) Date of publication and mention of the grant of the patent: **14.01.2015**
(21) Application number: 11154204.9
(22) Date of filing: 11.02.2011
(51) Int. Cl.: H04W 40/22, H04W 40/34, H04W 40/38, H04L 12/733

(54) **Communications system configured to correct an association mismatch and related methods**
Kommunikationssystem, das zur Korrektur eines Zusammenhangfehlers konfiguriert wurde, und zugehörige Verfahren
Système de communications configuré pour corriger une désadaptation d'association et procédés correspondants

(43) Date of publication of application: 15.08.2012
(73) Proprietor: BlackBerry Limited, Waterloo, ON N2K 0A7 (CA)
(72) Inventor: Son, Giyeong, Waterloo Ontario N2L 5Z5 (CA); Preiss, Bruno R., Waterloo Ontario N2L 5Z5 (CA); Whittington, Graeme, Mississauga Ontario L4W 0B4 (CA); Rogan, Michael, Waterloo Ontario N2L 5Z5 (CA); Russel, Graham, Waterloo Ontario N2L 5Z5 (CA)
(74) Representative: Hibbert, Juliet Jane Grace

(56) References cited:
- EP-A2- 1 826 963
- US-A1- 2004 242 154
- US-A1- 2010 061 264

## Description

### Technical Field

The present disclosure relates to the field of communications systems, and, in particular, to communication infrastructure nodes for communications systems that are configurd to correct an association mismatch.

### Background

Mobile wireless communications devices have become pervasive in today's society. Many individuals own such mobile wireless communications devices and use them on a daily basis, both for placing voice calls and for performing other tasks. For example, some mobile wireless communications devices may now provide connectivity with the Internet, and may allow access to e-mail accounts, instant messaging accounts, and social networking sites.

Service providers, together with intermediary networks, provide for the connectivity between these mobile wireless communications devices and other mobile wireless communications devices, as well as the internet. Due to the popularity of such mobile wireless communications devices, the service providers, and especially the intermediary networks, are often congested with traffic.

This congestion can cause degradation in the quality of service delivered to the mobile wireless communications devices (i.e. poor voice connections, dropped calls, slow data connections). Consequently, it is desirable for the communications system as a whole to provide quick, efficient communications between the service providers and the mobile wireless communications devices.

Document EP1826963 discloses a mobile communication terminal that communicate with a base station of an infrastructure network via any one of a single-hop route, an a multi-hop route using other terminals in accordance with information on an application.

### Brief Description of the Drawing

FIG. 1 is a schematic block diagram of a communications system according to the present disclosure.

FIG. 2 is a block diagram of the communications system of FIG. 1 with an association mismatch communications path between the service provider device and the mobile wireless communications device.

FIG. 3 is a block diagram of the communications system of FIG. 1 with a corrected association mismatch path between the service provider device and the mobile wireless communications device.

FIG. 4 is a block diagram of the communications system of FIG. 1 with a different corrected association mismatch path between the service provider device and the mobile wireless communications device.

FIG. 5 is a flowchart of a method of operating the communications system of FIG. 1.

FIG. 6 is a flowchart of a more detailed method of operating the communications system of FIG. 1.

FIG. 7 is a schematic block diagram illustrating example components which may be used in the communications system of FIG. 1, in accordance with an example embodiment.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communications system may comprise a service provider device, a mobile wireless communications device, and a plurality of communication infrastructure nodes. The plurality of communication infrastructure nodes may be configured to generate an association mismatch communications path between the service provider device and the mobile wireless communications device, the association mismatch communications path including at least two communication infrastructure nodes in series. The plurality of communications nodes may also be configured to generate a corrected association communications path between the service provider device and the mobile wireless communications device from the mismatch communications path, the corrected association communications path including just a single communication infrastructure node from the at least two communication infrastructure nodes. This advantageously reduces the load on the network, reduces routing time, and therefore increases quality of the service delivered to the mobile wireless communications device.

The at least two communication infrastructure nodes may comprise a first communication infrastructure node coupled to the service provider device, and a second communication infrastructure node coupled to the mobile wireless device. The mobile wireless communications device may be switched from the second to the first communication infrastructure node.

Additionally or alternatively, the at least two communication infrastructure nodes may comprise a first communication infrastructure node coupled to the service provider device, and a second communication infrastructure node coupled to the mobile wireless device. The service provider device may be switched from the first to the second communication infrastructure node.

Moreover, the plurality of communication infrastructure nodes may further determine whether an initially established communications path between the service provider device and the mobile wireless communications device defines an association mismatch communications path. In some applications, the service provider device may be configured to provide connectivity with a cellular network. Also, the service provider device may be configured to provide Internet connectivity.

The service provider device may comprise a service provider server. The mobile wireless communications device may comprise a wireless transceiver and a processor coupled thereto. Each communication infrastructure node may comprise a processor and a communications interface coupled thereto.

A method aspect is directed to a method of operating a communications system. The method may include generating an association mismatch communications path between a service provider device and a mobile wireless communications device, the association mismatch communications path including at least two communication infrastructure nodes, of a plurality of communication infrastructure notes, in series. The method may also include generating a corrected association communications path between the service provider device and the mobile wireless communications device from the mismatch communications path, the corrected association communications path including just a single communication infrastructure node from the at least two communication infrastructure nodes.

The invention is defined by the system claim 1 and the method claim 7.

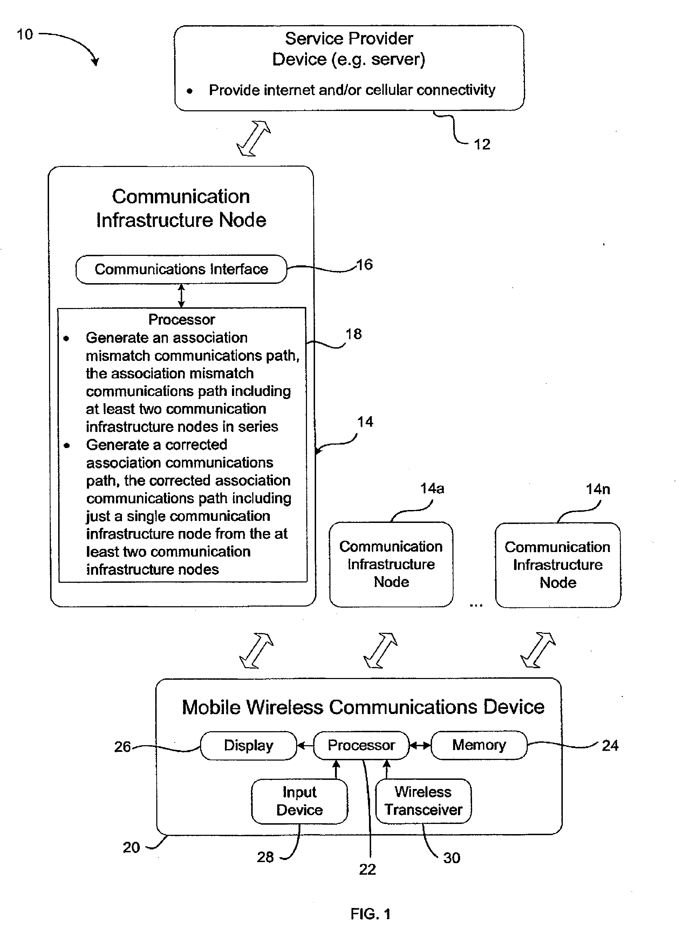

With initial reference to FIG. 1, a communications system **10** is now described. The communications system **10** includes a service provider device **12**, such as a service provider server that provides Internet and/or cellular connectivity. The communications system **10** also includes a mobile wireless communications device **20** and a plurality of communication infrastructure nodes **14a...14n** for providing a communications path between the service provider device **12** and the mobile wireless communications device **20.** These infrastructure nodes may be relays, cellular base stations, or servers, for example.

The mobile wireless communications device **20** comprises a processor **22** coupled to a memory **24,** display **26,** input device **28**, and wireless transceiver **30**. In addition, each communication infrastructure nodes **14a...14n** includes a communications interface **16** coupled to a processor **18**. The communications interface **16** may include a wired transceiver, a wireless transceiver, or both a wired and a wireless transceiver, and is configured to communicate with both the service provider device **12** and the mobile wireless communications device **20**.

As explained above, the communication infrastructure nodes **14a...14n** provide a communications path between the service provider device **12** and the mobile wireless communications device **20.** This communications path enables the mobile wireless communications device **20** to access the services provided by the service provider device **14**, such as connectivity with the Internet. During such operation, the mobile wireless communications device **20** and the service provider device **12** are therefore each in communication with at least one infrastructure node **14a...14n.**

In the course of operation of the communications system **10**, it is desirable for the communications path between the service provider device **12** and the mobile wireless communications device **20** to include only one infrastructure node **14a...14n** to help ensure quality of service, to help reduce routing costs, and to help reduce the transaction time. That is, it is desirable that the service provider device **12** and the mobile wireless communications device **20** are each connected, or associated to the same infrastructure node **14a...14n.**

Unfortunately, when the initial communications path is established, or when an existing communications path is severed then re-established, the service provider device **12** and the mobile wireless communications device **20** may each be connected to a different infrastructure node **14a...14n.** This is known as an association mismatch. As such, it can be said that the processor **18** of at least one of the communication infrastructure nodes **14a...14n** generates an association mismatch communications path including at least two communication infrastructure nodes in series.

When operating in an association mismatch condition, the infrastructure node **14a...14n** that the service provider device **12** is connected then communicates with the infrastructure node to which the mobile wireless communications device **20** is connected in order to facilitate the communications between the service provider device **12** and the mobile wireless communications device **20**.

To identify this operating condition, the processor **18** of the communications infrastructure node **14a...14n** to which either the service provider device **12** or mobile wireless communications device **20** is connected is configured to determine whether the initially established communications path defines an association mismatch communications path.

It should be understood that each component of the communications system **10** may have an address. That is, the service provider device **12**, each communication infrastructure node **14a...14n**, and the mobile wireless communications device **20** may have an address. Each address may indicate whether it belongs to a mobile wireless communications device **20**, a communication infrastructure node **14a...14n,** or the service provider device **12**. Therefore, to make the determination of whether the initially established communications path defines an association mismatch path, the processor **18** checks whether the destination of communications is the mobile wireless communications device **20**. If so, the processor **18** checks if that communication infrastructure node **14a...14n** is coupled to both the mobile wireless communications device **20** and the service provider device **12**. If so, there is not an association mismatch. If not, then an association mismatch has been detected.

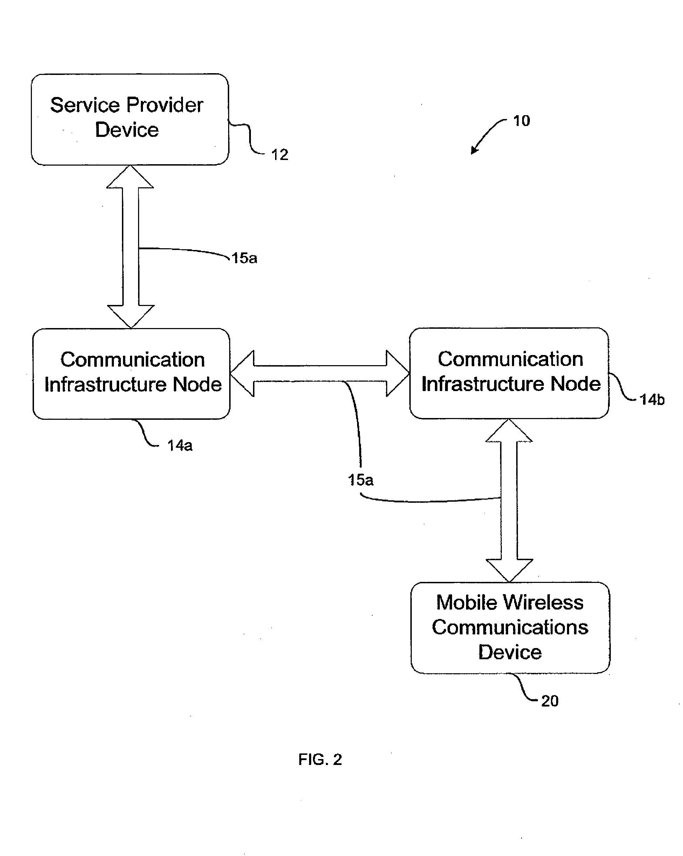

Referring additionally to FIG. 2, an association mismatch situation is illustrated. Here, the service provider device **12** is associated with a first communication infrastructure node **14a**, while the mobile wireless communications device **20** is associated with a second communication infrastructure node **14b**. The communication infrastructure node **14b** is connected to the communication infrastructure node **14a** to thereby relay communications thereto from the mobile wireless communications device **20**, and the communication infrastructure node **14a** then relays the communications to the service provider device **12,** thereby creating the association mismatch communications path **15a.**

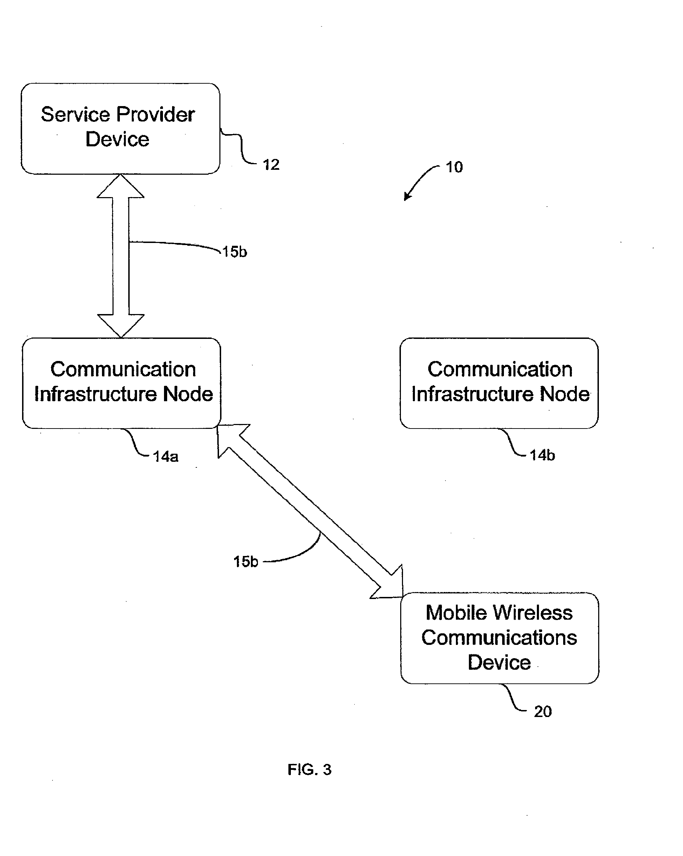

Such an association mismatch is costly in terms of processing power and routing costs, and may even reduce the speed of the connecting between the service provider device **12** and the mobile wireless communications device **20**. Therefore, the processor **18** of one of the communication infrastructure nodes **14a...14n** generates a corrected association communications path that includes just a single communication infrastructure node. As shown in FIG. 3, the corrected association communications path **15b** includes only one communication infrastructure node **14a** with both the service provider device **12** and mobile wireless communications device **20** connected thereto.

As will be readily apparent to those of skill in the art, in FIG. 3, the mobile wireless communications device **20** has changed its association such that it is no longer associated with the communication infrastructure node **14b**, but is instead associated with the communications infrastructure node **14a**. The mobile wireless communications device **20** has done this because the processor **18** of the communication infrastructure node **14b** instructed the mobile wireless communications device **20** to associate with the communications infrastructure node **14a** instead.

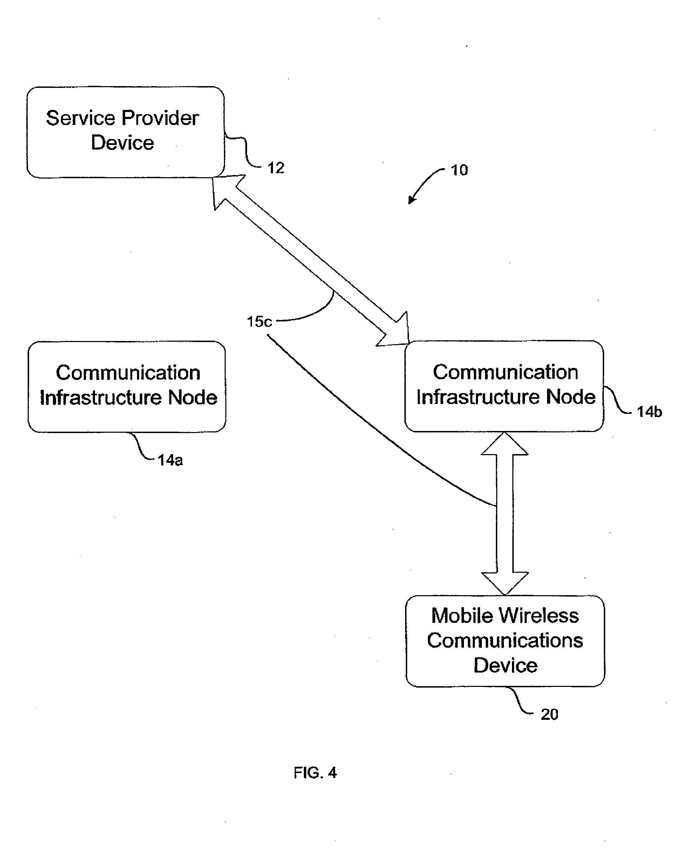

Those skilled in the art will appreciate that there are other ways to correct the association mismatch. For example, as shown in FIG. 4, the service provider device **12** has changed its association such that it is no longer associated with the communications infrastructure node **14a,** but is instead associated with the communications infrastructure node **14b.** The mobile service provider device **12** has done this because the processor **18** of the communication infrastructure node **14a** instructed the service provider device **12** to associate with the communications infrastructure node **14b** instead.

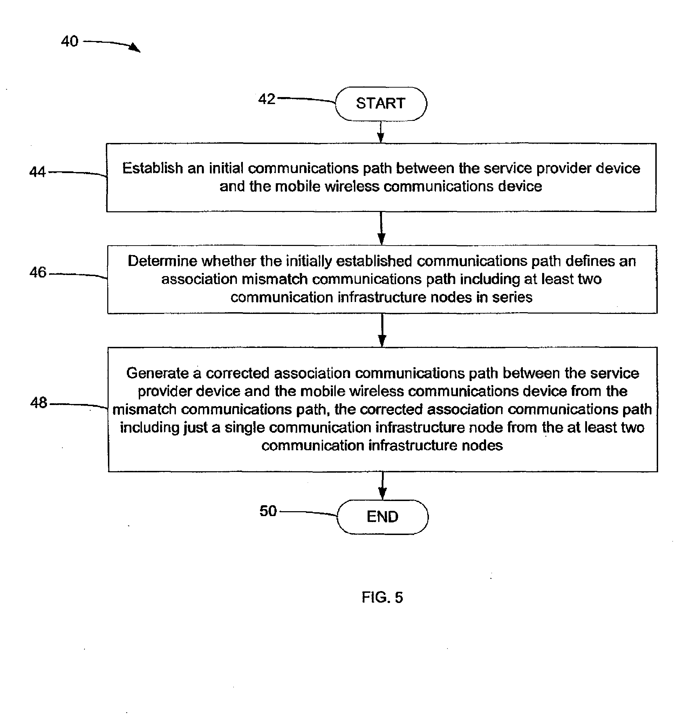

Referring now to the flowchart **40** in FIG. 5, a method of operating the communications system **10** of FIG. 1 is now described. After the start (Block **42**), an initial communications path is established between the service provider device and the mobile wireless communications device (Block **44**). Next, at least one of the communications infrastructure nodes determines whether the initially established communications path defines an asociation mismatch communications path including at least two communication infrastructure nodes in series (Block **46**).

Then, one of the communications infrastructure nodes generates a corrected association communications path between the service provider device and the mobile wireless communications device from the mismatch communications path, the corrected association communications path including just a single communication infrastructure node from the at least two communication infrastructure nodes (Block **48**). Block **50** indicates the end of the method.

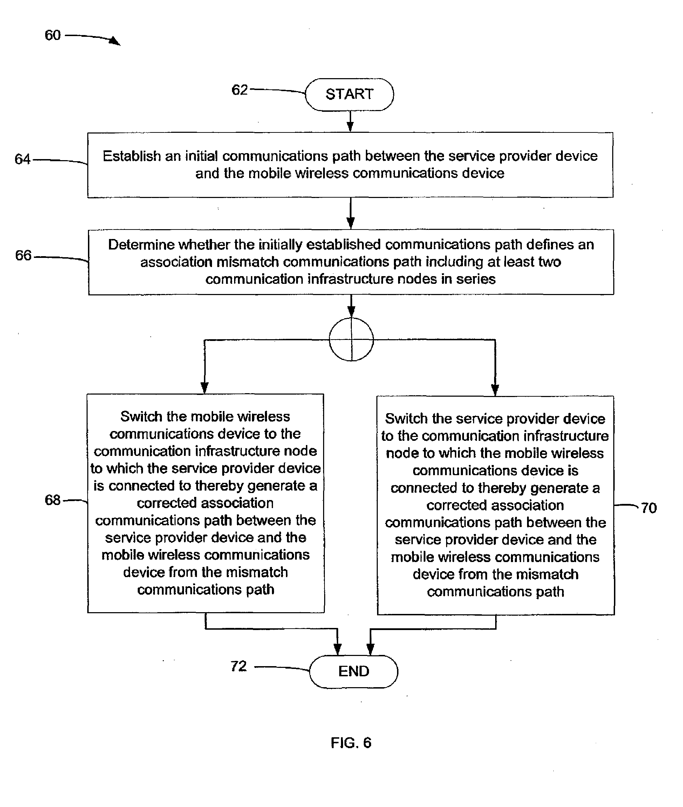

Referring now to the flowchart **60** in FIG. 6, a more detailed method of operating the communications system **10** of FIG. 1 is now described. After the start (Block **62**), an initial communications path is established between the service provider device and the mobile wireless communications device (Block **64**). Next, one of the communications infrastructure nodes determines whether the initially established communications path defines an asociation mismatch communications path including at least two communication infrastructure nodes in series (Block **66**).

Next, at least one of the communications infrastructure nodes may switch the mobile wireless communications device to the communication infrastructure node to which the service provider device is connected to thereby generate a corrected association communications path between the service provider device and the mobile wireless communications device from the mismatch communications path (Block **68**). Alternatively, at least one of the communications infrastructure nodes may switch the service provider device to the communication infrastructure node to which the mobile wireless communications device is connected to thereby generate a corrected association communications path between the service provider device and the mobile wireless communications device from the mismatch communications path (Block **70**). Block **72** indicates the end of the method.

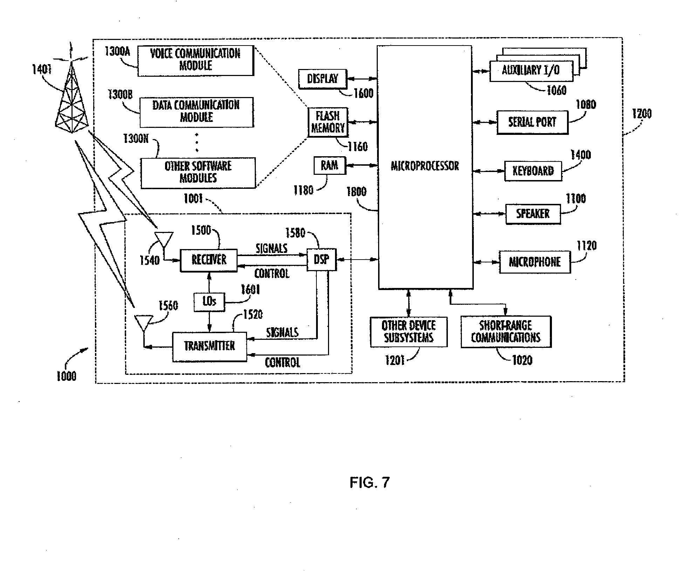

Example components of a mobile wireless communications device **1000** that may be used in accordance with the above-described embodiments are further described below with reference to FIG. 7. The mobile wireless communications device **1000** may function as either the electronic device described above. The device **1000** illustratively includes a housing **1200,** a keypad **1400** and an output device **1600.** The output device shown is a display **1600**, which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.** Alternatively or additionally, the keypad **1400** may be a "soft" keypad implemented, for example, by providing images of keys on the display **1600.**

The housing **1200** may be elongated vertically, or may take on other sizes and shapes (including clamshell or slider housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001**; a short-range communications subsystem **1020**; the keypad **1400** and the display 1600, along with other input/output devices **1060**, **1080**, **1100** and **1120**; as well as memory devices **1160**, **1180** and various other device subsystems **1201**. The mobile device 1000 may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications 1300A and **1300B,** may be installed on the device **1000** during manufacture. In addition, a personal information manager (PIM) application (not shown) may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem 1020. The communications subsystem **1001** includes a receiver **1500,** a transmitter **1520,** and one or more antennas **1540** and **1560**. In addition, the communications subsystem **1001** also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex^{TM}, Data TAC^{TM} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800**. The received signal is then further processed by the processing device **1800** for an output to the display **1600,** or alternatively to some other auxiliary input/output (I/O) device **1060.** A device may also be used to compose data items, such as e-mail messages, using the keypad **1400** and/or some other auxiliary I/O device **1060,** such as a trackball, a touchpad, an optical trackpad, a rocker switch, a thumb-wheel, touch sensitive display or some other type of input device. The composed data items may then be transmitted over the communications network **1401** via the communications subsystem **1001**.

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{TM} communications module to provide for communication with similarly-enabled systems and devices.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A communications system (10) comprising:
a service provider device (12);
a mobile wireless communications device (20); and
a plurality of communication infrastructure nodes (14a...14n) configured to
determine when a generated communications path is an association mismatch communications path (15a) between said service provider device and said mobile wireless communications device, the association mismatch communications path including at least two communication infrastructure nodes (14a, 14b) in series, and connect said service provider device (12) and said mobile wireless communications device (20) via the association mismatch communications path, wherein the generated communications path is determined to not be an association mismatch communications path by
determining, at a given one of said plurality of communication infrastructure nodes (14a...14n), that a destination of communications is said mobile wireless communications device (20), and
determining that said given one of said plurality of communication infrastructure nodes (14a...14n) is coupled to both said mobile wireless communications device (20) and said service provider device (12); and
if the generated communications path is determined to be an association mismatch communications path, generate a corrected association communications path (15b) between said service provider device (12) and said mobile wireless communications device (20) from said mismatch communications path, the corrected association communications path including just a single communication infrastructure node (14a) from the at least two communication infrastructure nodes, by switching said service provider device and said mobile wireless communications device to be connected via the corrected association communications path.

2. The communications system (10) of Claim 1,
wherein the at least two communication infrastructure nodes comprise a first communication infrastructure node (14a) coupled to said service provider device (12), and a second communication infrastructure node (14b) coupled to said mobile wireless device (20); and wherein said mobile wireless communications device is switched from said second to said first communication infrastructure node in response to an instruction from said second communication infrastructure node.

3. The communications system (10) of Claim 1,
wherein the at least two communication infrastructure nodes comprise a first communication infrastructure node (14a) coupled to said service provider device (12), and a second communication infrastructure node (14b) coupled to said mobile wireless device (20); and wherein said service provider device (12) is switched from said first to said second communication infrastructure node in response to an instruction from said first communication infrastructure node.

4. The communications system (10) of Claim 1,
wherein said service provider device (12) is configured to provide connectivity with a cellular network.

5. The communications system (10) of Claim 1,
wherein said service provider device (12) is configured to provide Internet connectivity.

6. The communications system (10) of Claim 1,
wherein said service provider device (12) comprises a service provider server.

7. A method of operating a communications system (10) comprising:
determining (66) when a generated communications path is an association mismatch communications path (15a) between a service provider device (12) and a mobile wireless communications device (20), the association mismatch communications path including at least two communication infrastructure nodes (14a, 14b), of a plurality of communication infrastructure notes (14a...14n), in series, and connect the service provider device and the mobile wireless communications device (20) via the association mismatch communications path, wherein the generated communications path is determined to not be an association mismatch communications path by
determining, at a given one of the plurality of communication infrastructure nodes (14a...14n), that a destination of communications is the mobile wireless communications device (20), and
determining that the given one of the plurality of communication infrastructure nodes is coupled to both the mobile wireless communications device (20) and the service provider device (12); and
if the generated communications path is determined to be an association mismatch communications path, generate a corrected association communications path (15b) between the service provider device and the mobile wireless communications device from the mismatch communications path, the corrected association communications path including just a single communication infrastructure node (14a) from the at least two communication infrastructure nodes, by switching (68, 70) the service provider device and the mobile wireless communications device to be connected via the corrected association communications path.

8. The method of Claim 7, wherein the at least two communication infrastructure nodes comprise a first communication infrastructure node (14a) coupled to the service provider device (12), and a second communication infrastructure node (14b) coupled to the mobile wireless device (12); and wherein the mobile wireless communications device (20) is switched from the second to the first communication infrastructure node in response to an instruction from the second communication infrastructure node.

9. The method of Claim 8, wherein the at least two communication infrastructure nodes comprise a first communication infrastructure node (14a) coupled to the service provider device (12), and a second communication infrastructure node (14b) coupled to the mobile wireless device (20); and wherein the service provider device is switched from the first to the second communication infrastructure node in response to an instruction from the first communication infrastructure node.

10. The method of Claim 8, wherein the service provider device (12) is configured to provide connectivity with a cellular network.

## Patentansprüche

1. Ein Kommunikationssystem (10), das aufweist:
eine Dienstanbietervorrichtung (12);
eine mobile drahtlose Kommunikationsvorrichtung (20); und
eine Vielzahl von Kommunikationsinfrastrukturknoten (14a ... 14n), konfiguriert zum Bestimmen, wenn ein erzeugter Kommunikationspfad ein Assoziation-Fehlanpassung-Kommunikationspfad (15a) zwischen der Dienstanbietervorrichtung und der mobilen drahtlosen Kommunikationsvorrichtung ist, wobei der Assoziation-Fehlanpassung-Kommunikationspfad zumindest zwei Kommunikationsinfrastrukturknoten (14a, 14b) in Serie umfasst, und Verbinden der Dienstanbietervorrichtung (12) und der mobilen drahtlosen Kommunikationsvorrichtung (20) über den Assoziation-Fehlanpassung-Kommunikationspfad, wobei bestimmt wird, dass der erzeugte Kommunikationspfad kein Assoziation-Fehlanpassung-Kommunikationspfad ist, durch
Bestimmen, an einem gegebenen der Vielzahl von Kommunikationsinfrastrukturknoten (14a ... 14n), dass ein Ziel von Kommunikationen die mobile drahtlose Kommunikationsvorrichtung (20) ist, und
Bestimmen, dass der gegebene der Vielzahl von Kommunikationsinfrastrukturknoten (14a ... 14n) mit sowohl der mobilen drahtlosen Kommunikationsvorrichtung (20) als auch der Dienstanbietervorrichtung (12) gekoppelt ist; und
wenn bestimmt wird, dass der erzeugte Kommunikationspfad ein Assoziation-Fehlanpassung-Kommunikationspfad ist, Erzeugen eines korrigierten Assoziation-Kommunikationspfads (15b) zwischen der Dienstanbietervorrichtung (12) und der mobilen drahtlosen Kommunikationsvorrichtung (20) aus dem Fehlanpassung-Kommunikationspfad, wobei der korrigierte Assoziation-Kommunikationspfad nur einen einzigen Kommunikationsinfrastrukturknoten (14a) aus den zumindest zwei Kommunikationsinfrastrukturknoten umfasst, durch Vermitteln der Dienstanbietervorrichtung und der mobilen drahtlosen Kommunikationsvorrichtung, um über den korrigierten Assoziation-Kommunikationspfad verbunden zu sein.

2. Das Kommunikationssystem (10) gemäß Anspruch 1,
wobei die zumindest zwei Kommunikationsinfrastrukturknoten einen ersten Kommunikationsinfrastrukturknoten (14a), der mit der Dienstanbietervorrichtung (12) gekoppelt ist, und einen zweiten Kommunikationsinfrastrukturknoten (14b) aufweisen, der mit der mobilen drahtlosen Vorrichtung (20) gekoppelt ist; und wobei die mobile drahtlose Kommunikationsvorrichtung von dem zweiten zu dem ersten Kommunikationsinfrastrukturknoten in Reaktion auf eine Anweisung von dem zweiten Kommunikationsinfrastrukturknoten geschaltet wird.

3. Das Kommunikationssystem (10) gemäß Anspruch 1,
wobei die zumindest zwei Kommunikationsinfrastrukturknoten einen ersten Kommunikationsinfrastrukturknoten (14a), der mit der Dienstanbietervorrichtung (12) gekoppelt ist, und einen zweiten Kommunikationsinfrastrukturknoten (14b) aufweisen, der mit der mobilen drahtlosen Vorrichtung (20) gekoppelt ist; und wobei die Dienstanbietervorrichtung (12) von dem ersten zu dem zweiten Kommunikationsinfrastrukturknoten in Reaktion auf eine Anweisung von dem ersten Kommunikationsinfrastrukturknoten geschaltet wird.

4. Das Kommunikationssystem (10) gemäß Anspruch 1,
wobei die Dienstanbietervorrichtung (12) konfiguriert ist zum Vorsehen einer Konnektivität mit einem zellularen Netzwerk.

5. Das Kommunikationssystem (10) gemäß Anspruch 1,
wobei die Dienstanbietervorrichtung (12) konfiguriert ist zum Vorsehen einer Internet-Konnektivität.

6. Das Kommunikationssystem (10) gemäß Anspruch 1,
wobei die Dienstanbietervorrichtung (12) einen Dienstanbieterserver aufweist.

7. Ein Verfahren zum Betreiben eines Kommunikationssystems (10), das aufweist:
Bestimmen (66), wenn ein erzeugter Kommunikationspfad ein Assoziation-Fehlanpassung-Kommunikationspfad (15a) zwischen einer Dienstanbietervorrichtung (12) und einer mobilen drahtlosen Kommunikationsvorrichtung (20) ist, wobei der Assoziation-Fehlanpassung-Kommunikationspfad zumindest zwei Kommunikationsinfrastrukturknoten (14a, 14b), aus einer Vielzahl von Kommunikationsinfrastrukturknoten (14a ... 14n), in Serie umfasst, und Verbinden der Dienstanbietervorrichtung und der mobilen drahtlosen Kommunikationsvorrichtung (20) über den Assoziation-Fehlanpassung-Kommunikationspfad, wobei bestimmt wird, dass der erzeugte Kommunikationspfad kein Assoziation-Fehlanpassung-Kommunikationspfad ist, durch
Bestimmen, an einem gegebenen der Vielzahl von Kommunikationsinfrastrukturknoten (14a ... 14n), dass ein Ziel von Kommunikationen die mobile drahtlose Kommunikationsvorrichtung (20) ist, und
Bestimmen, dass der gegebene der Vielzahl von Kommunikationsinfrastrukturknoten mit sowohl der mobilen drahtlosen Kommunikationsvorrichtung (20) als auch der Dienstanbietervorrichtung (12) gekoppelt ist; und
wenn bestimmt wird, dass der erzeugte Kommunikationspfad ein Assoziation-Fehlanpassung-Kommunikationspfad ist, Erzeugen eines korrigierten Assoziation-Kommunikationspfads (15b) zwischen der Dienstanbietervorrichtung und der mobilen drahtlosen Kommunikationsvorrichtung aus dem Fehlanpassung-Kommunikationspfad, wobei der korrigierte Assoziation-Kommunikationspfad nur einen einzigen Kommunikationsinfrastrukturknoten (14a) aus den zumindest zwei Kommunikationsinfrastrukturknoten umfasst, durch Vermitteln (68, 70) der Dienstanbietervorrichtung und der mobilen drahtlosen Kommunikationsvorrichtung, um über den korrigierten Assoziation-Kommunikationspfad verbunden zu sein.

8. Das Verfahren gemäß Anspruch 7, wobei die zumindest zwei Kommunikationsinfrastrukturknoten einen ersten Kommunikationsinfrastrukturknoten (14a), der mit der Dienstanbietervorrichtung (12) gekoppelt ist, und einen zweiten Kommunikationsinfrastrukturknoten (14b) aufweisen, der mit der mobilen drahtlosen Vorrichtung (12) gekoppelt ist; und wobei die mobile drahtlose Kommunikationsvorrichtung (20) von dem zweiten zu dem ersten Kommunikationsinfrastrukturknoten in Reaktion auf eine Anweisung von dem zweiten Kommunikationsinfrastrukturknoten geschaltet wird.

9. Das Verfahren gemäß Anspruch 8, wobei die zumindest zwei Kommunikationsinfrastrukturknoten einen ersten Kommunikationsinfrastrukturknoten (14a), der mit der Dienstanbietervorrichtung (12) gekoppelt ist, und einen zweiten Kommunikationsinfrastrukturknoten (14b) aufweisen, der mit der mobilen drahtlosen Vorrichtung (20) gekoppelt ist; und wobei die Dienstanbietervorrichtung von dem ersten zu dem zweiten Kommunikationsinfrastrukturknoten in Reaktion auf eine Anweisung von dem ersten Kommunikationsinfrastrukturknoten geschaltet wird.

10. Das Verfahren gemäß Anspruch 8, wobei die Dienstanbietervorrichtung (12) konfiguriert ist zum Vorsehen einer Konnektivität mit einem zellularen Netzwerk.

## Revendications

1. Système de communications (10) comprenant :
un dispositif de fournisseur de services (12) ;
un dispositif de communications sans fil mobile (20) ; et
une pluralité de noeuds d'infrastructure de communication (14a...14n) configurés pour
déterminer quand un trajet de communications généré est un trajet de communications de non-concordance d'association (15a) entre ledit dispositif de fournisseur de services et ledit dispositif de communications sans fil mobile, le trajet de communications de non-concordance d'association comprenant au moins deux noeuds d'infrastructure de communication (14a, 14b) en série, et connecter ledit dispositif de fournisseur de services (12) et ledit dispositif de communications sans fil mobile (20) via le trajet de communications de non-concordance d'association, où le trajet de communications généré est déterminé comme n'étant pas un trajet de communications de non-concordance d'association en
déterminant, au niveau d'un noeud donné de ladite pluralité de noeuds d'infrastructure de communication (14a...14n), qu'une destination de communications est ledit dispositif de communications sans fil mobile (20), et
déterminant que ledit un noeud donné de ladite pluralité de noeuds d'infrastructure de communication (14a...14n) est couplé à la fois audit dispositif de communications sans fil mobile (20) et audit dispositif de fournisseur de services (12) ; et
si le trajet de communications généré est déterminé comme étant un trajet de communications de non-concordance d'association, générer un trajet de communications d'association corrigé (15b) entre ledit dispositif de fournisseur de services (12) et ledit dispositif de communications sans fil mobile (20) à partir dudit trajet de communications de non-concordance, le trajet de communications d'association corrigé comprenant juste un seul noeud d'infrastructure de communication (14a) parmi les au moins deux noeuds d'infrastructure de communication, en commutant ledit dispositif de fournisseur de services et ledit dispositif de communications sans fil mobile devant être connectés via le trajet de communications d'association corrigé.

2. Système de communications (10) selon la revendication 1, dans lequel les au moins deux noeuds d'infrastructure de communication comprennent un premier noeud d'infrastructure de communication (14a) couplé audit dispositif de fournisseur de services (12), et un second noeud d'infrastructure de communication (14b) couplé audit dispositif sans fil mobile (20) ; et dans lequel ledit dispositif de communications sans fil mobile est commuté dudit second audit premier noeud d'infrastructure de communication en réponse à une instruction en provenance dudit second noeud d'infrastructure de communication.

3. Système de communications (10) selon la revendication 1, dans lequel les au moins deux noeuds d'infrastructure de communication comprennent un premier noeud d'infrastructure de communication .(14a) couplé audit dispositif de fournisseur de services (12), et un second noeud d'infrastructure de communication (14b) couplé audit dispositif sans fil mobile (20) ; et dans lequel ledit dispositif de fournisseur de services (12) est commuté dudit premier audit second noeud d'infrastructure de communication en réponse à une instruction en provenance dudit premier noeud d'infrastructure de communication.

4. Système de communications (10) selon la revendication 1, dans lequel ledit dispositif de fournisseur de services (12) est configuré pour fournir une connectivité avec un réseau cellulaire.

5. Système de communications (10) selon la revendication 1, dans lequel ledit dispositif de fournisseur de services (12) est configuré pour fournir une connectivité Internet.

6. Système de communications (10) selon la revendication 1, dans lequel ledit dispositif de fournisseur de services (12) comprend un serveur de fournisseur de services.

7. Procédé d'exploitation d'un système de communications (10) comprenant :
la détermination (66) de quand un trajet de communications généré est un trajet de communications de non-concordance d'association (15a) entre un dispositif de fournisseur de services (12) et un dispositif de communications sans fil mobile (20), le trajet de communications de non-concordance d'association comprenant au moins deux noeuds d'infrastructure de communication (14a, 14b), d'une pluralité de noeuds d'infrastructure de communication (14a...14n), en série, et la connexion du dispositif de fournisseur de services et du dispositif de communications sans fil mobile (20) via le trajet de communications de non-concordance d'association, où le trajet de communications généré est déterminé comme n'étant pas un trajet de communications de non-concordance d'association en
déterminant, au niveau d'un noeud donné de la pluralité de noeuds d'infrastructure de communication (14a...14n), qu'une destination de communications est le dispositif de communications sans fil mobile (20), et
déterminant que le un noeud donné de la pluralité de noeuds d'infrastructure de communication est couplé à la fois au dispositif de communications sans fil mobile (20) et au dispositif de fournisseur de services (12) ; et
si le trajet de communications généré est déterminé comme étant un trajet de communications de non-concordance d'association, la génération d'un trajet de communications d'association corrigé (15b) entre le dispositif de fournisseur de services et le dispositif de communications sans fil mobile à partir du trajet de communications de non-concordance, le trajet de communications d'association corrigé comprenant juste un seul noeud d'infrastructure de communication (14a) parmi les au moins deux noeuds d'infrastructure de communication, en commutant (68, 70) le dispositif de fournisseur de services et le dispositif de communications sans fil mobile devant être connectés via le trajet de communications d'association corrigé.

8. Procédé selon la revendication 7, dans lequel les au moins deux noeuds d'infrastructure de communication comprennent un premier noeud d'infrastructure de communication (14a) couplé au dispositif de fournisseur de services (12), et un second noeud d'infrastructure de communication (14b) couplé au dispositif sans fil mobile (12) ; et dans lequel ledit dispositif de communications sans fil mobile (20) est commuté du second au premier noeud d'infrastructure de communication en réponse à une instruction en provenance du second noeud d'infrastructure de communication.

9. Procédé selon la revendication 8, dans lequel les au moins deux noeuds d'infrastructure de communication comprennent un premier noeud d'infrastructure de communication (14a) couplé au dispositif de fournisseur de services (12), et un second noeud d'infrastructure de communication (14b) couplé au dispositif sans fil mobile (20) ; et dans lequel le dispositif de fournisseur de services est commuté du premier au second noeud d'infrastructure de communication en réponse à une instruction en provenance du premier noeud d'infrastructure de communication.

10. Procédé selon la revendication 8, dans lequel le dispositif de fournisseur de services (12) est configuré pour fournir une connectivité avec un réseau cellulaire.
